# EUROPÄISCHE PATENTSCHRIFT

(11) **EP 3 982 025 B1**
(45) Veröffentlichungstag und Bekanntmachung des Hinweises auf die Patenterteilung: **24.12.2025**
(21) Anmeldenummer: 21000280.4
(22) Anmeldetag: 04.10.2021
(51) Int. Cl.: F16L 13/08, B23K 1/00, F16L 19/02

(54) **ANSCHLUSSARMATUR, KONFEKTIONIERTE MEDIENLEITUNG MIT ROHR-UND/ODER SCHLAUCHFÖRMIGER MEDIENLEITUNG UND EINER SOLCHEN ANSCHLUSSARMATUR SOWIE VERFAHREN ZUM HERSTELLEN EINER SOLCHEN KONFEKTIONIERTEN MEDIENLEITUNG**
CONNECTION FITTING, PREFABRICATED MEDIA LINE WITH A TUBULAR AND / OR HOSE-SHAPED MEDIA LINE AND SUCH A CONNECTION FITTING AND METHOD FOR MANUFACTURING SUCH A PREFABRICATED MEDIA LINE
ROBINETTERIE DE RACCORDEMENT, CONDUITE DE FLUIDE SURMOULÉE POURVUE DE CONDUITE DE FLUIDE TUBULAIRE ET/OU EN FORME DE TUYAU ET D'UNE TELLE ROBINETTERIE DE RACCORDEMENT, AINSI QUE PROCÉDÉ DE PRODUCTION D'UNE TELLE CONDUITE DE FLUIDE SURMOULÉE

(30) Priorität: 09.10.2020 DE 102020006257
(43) Veröffentlichungstag der Anmeldung: 13.04.2022
(73) Patentinhaber: VOSS Fluid GmbH, 51688 Wipperfürth (DE)
(72) Erfinder: WASSERFUHR, Philipp, 51515 Kürten (DE); POTT, Harald, 42499 Hückeswagen (DE); WAGNER, Uwe, 51643 Gummbersbach (DE)
(74) Vertreter: Rebbereh, Cornelia

(56) Entgegenhaltungen:
- DE-T2- 69 008 989
- DE-U1- 202007 010 502
- DE-U1- 9 411 378
- GB-A- 1 038 612

## Beschreibung

Die Erfindung betrifft eine Anschlussarmatur mit zumindest einem ersten Anschlussabschnitt zum Anschließen und Befestigen einer rohr- und/oder schlauchförmigen Medienleitung und zumindest einem zweiten Anschlussabschnitt zum Verbinden mit einer anderen Medienleitung oder einem Aggregat, eine konfektionierte Medienleitung mit zumindest einer rohr- und/oder schlauchförmigen Medienleitung und zumindest einer solchen Anschlussarmatur sowie ein Verfahren zum Herstellen einer solchen konfektionierten Medienleitung, umfassend zumindest eine rohr- und/oder schlauchförmige Medienleitung und zumindest eine solche Anschlussarmatur.

Anschlussarmaturen, die einen ersten Anschlussabschnitt zum Anschließen und Befestigen einer rohrförmigen bzw. schlauchförmigen Medienleitung und einen zweiten Anschlussabschnitt, z.B. in Form eines Dichtkegelabschnitts, umfassen, wobei der zweite Anschlussabschnitt zum Verbinden mit einer anderen Anschlussarmatur einer anderen Medienleitung oder einem Aggregat dient, sind im Stand der Technik bekannt. Insbesondere sind diese in Form von Hydraulikarmaturen ausgebildet, wobei der Dichtkegelabschnitt mit einem O-Ring versehen wird und beispielsweise in eine geeignete Anschlussarmatur am Ende einer zweiten Medienleitung eingreift. Solche Anschlussarmaturen sind als DKO-Armaturen, also Dichtkegel-O-Ring-Armaturen, bekannt. Diese umfassen außer dem Dichtkegel, auf dem der O-Ring sitzt, eine Überwurfmutter und unterliegen Normvorgaben in Bezug auf die Schraubverbindung im Bereich der Überwurfmutter. Die Überwurfmutter übergreift außenseitig den ersten Anschlussabschnitt zum Anschließen und Befestigen der Medienleitung in Ausgestaltung als Hydraulikrohr und den zweiten Anschlussabschnitt der Anschlussarmatur. Die Medienleitung in Form des Hydraulikrohres wird üblicherweise durch Löten mit dem ersten Anschlussabschnitt der Anschlussarmatur verbunden. Zwischen dem ersten und dem zweiten Anschlussabschnitt ist meist ein vorkragender Bund ausgebildet, wobei die Überwurfmutter an diesem in Axialrichtung festgelegt ist. Als Überwurfmutter und rohr- bzw. schlauchförmige Medienleitung, insbesondere in Form des Hydraulikrohres, werden meist genormte Überwurfmuttern bzw. Medienleitungen verwendet. Dies führt dazu, dass der vorhandene Raum zwischen der Überwurfmutter und dem Hydraulikrohr oftmals gering ist, so dass die mögliche Wandstärke des ersten Anschlussabschnitts im Bereich der Lötverbindung mit der rohrförmigen Medienleitung in Form des Hydraulikrohres im Verhältnis zur Wandstärke des Hydraulikrohres bzw. der Medienleitung geringer ausgebildet ist. Gleichwohl ist es erforderlich, gerade aufgrund der Verwendung der Anschlussarmatur als Hydraulikarmatur, eine stabile und dichte Verbindung zwischen der Medienleitung in Form des Hydraulikrohrs und der Anschlussarmatur zu schaffen, um den auftretenden Drücken Widerstand leisten zu können.

Beispielsweise wird in der DIN3863 der Aufbau von gelöteten Kugelbuchsen beschrieben. Auch diese weisen konstruktionsbedingt dünne Wandstärken auf, weswegen lediglich schwache Lötverbindungen und dementsprechend geringe Betriebsdrücke des im Betrieb durch die Kugelbuchsen hindurchströmenden Mediums möglich sind.

Aus der DE 690 08 989 T2 ist ein Einlasskrümmer eines Kraftfahrzeugs bekannt, der ein Hauptrohr aus verformtem Aluminium mit kreisförmigem Querschnitt und einer Anzahl von Zweigrohren von verformtem Aluminium mit kreisförmigem Querschnitt umfasst. Die Zweigrohre werden jeweils an einem Ende in die jeweiligen rohrförmigen Vorsprünge des Hauptrohres eingefügt und mit diesen verlötet. Für die Herstellung des Einlasskrümmers wird das Hauptrohr mit einer Drosselklappenaufnahme verlötet. Hierbei wird eine Stufe am inneren Umfang der Aufnahme am Endbereich für das Einfügen des Hauptrohres hergestellt und bildet einen Bereich großen Durchmessers als Muffenbohrung für das Hauptrohr. Die Muffenbohrung weist axial von innen nach außen einen geraden Abschnitt, der sich von der Stufe aus erstreckt und einen etwas größeren Durchmesser als der Außendurchmesser des Hauptrohres aufweist, einen sich erweiternden Abschnitt, der sich vom axial äußeren Ende des geraden Abschnitts erstreckt und in Axialrichtung nach außen auseinanderläuft und einen Anordnungsabschnitt für Lotmaterial auf, der einen kreisförmigen Querschnitt aufweist und sich vom axial äußeren Ende des sich erweiternden Abschnitts erstreckt und im Durchmesser etwas größer als der größte Durchmesser des sich erweiternden Abschnitts ist, auf.

Die GB 1 038 612 A offenbart ein Muffenelement, das einen erweiterten Bohrungsabschnitt an zumindest einem Ende aufweist, eine hinterschnittene Schulter innerhalb des Rohres definierend, wobei die Bohrung angepasst ist, um ein Fingerhutrohr und einen Lotring zwischen einem außenseitig abgeschrägten inneren Ende des Fingerhutrohrs und der Schulter aufzunehmen, wobei das Muffenelement zur aneinander angrenzenden Aufnahme an einer zweiten inneren Schulter ein Ende einer Leitung, die dort angeschlossen werden soll, aufweist, und sich unter Einfluss von Wärme eine Lötverbindung zwischen der Muffe, dem Fingerhutrohr und dem Leitungsende ausbildet.

Ferner ist es bekannt, bei problematischen Anschlussarmaturen spezielle Hydraulikrohre als Medienleitung einzusetzen, die im Innen- und Außendurchmesser von den sonst üblichen Normgrößen abweichen. Hierdurch werden die Wandstärken der Anschlussarmatur zwischen dem Dichtkegel und dem Hydraulikrohr entsprechend angepasst. Als nachteilig erweist es sich hierbei, dass Sonderanfertigungen von Hydraulikrohren benötigt werden, die teilweise einen geringeren Durchmesser aufweisen als die Normrohre. Dementsprechend sind die Kosten für die Herstellung einer konfektionierten Medienleitung mit einer solchen Anschlussarmatur und entsprechendem Hydraulikrohr als Medienleitung deutlich höher als bei der Verwendung von Normteilen. Zum Verlöten von Hydraulikrohr und Anschlussarmatur wird hier meist ein Kupferlotring verwendet.

Ferner ist es bekannt, bei problematischen Anschlussarmaturen Lotpaste zum Verlöten von Hyraulikrohr und Anschlussarmatur zu verwenden, so dass ein stirnseitiges Verlöten des Hydraulikrohres möglich ist, wodurch die geringe Wandstärke des Dichtkegels der Anschlussarmatur, also deren kegelförmigen Anschlussabschnitts, ausgeglichen werden soll. Lotpaste erweist sich allerdings ebenfalls als nachteilig, da sowohl die aufgebrachte Menge an Lotpaste als auch deren Position nicht genau definiert bzw. vorgegeben werden können. Eine Kontrolle des Lötvorgangs durch austretendes Lot, das auf der Außenseite der Anschlussarmatur zwischen dieser und dem Hydraulikrohr als rohrförmiger Medienleitung austritt, ist nicht möglich.

Der vorliegenden Erfindung liegt daher die Aufgabe zugrunde, eine Anschlussarmatur mit zumindest einem ersten Anschlussabschnitt zum Anschließen und Befestigen einer rohr- und/oder schlauchförmigen Medienleitung und zumindest einem zweiten Anschlussabschnitt zum Verbinden mit einer anderen Medienleitung oder einem Aggregat, eine konfektionierte Medienleitung mit zumindest einer solchen rohr- und/oder schlauchförmigen Medienleitung und zumindest einer solchen Anschlussarmatur sowie ein Verfahren zum Herstellen einer solchen konfektionierten Medienleitung vorzusehen, wobei die vorstehend genannten Nachteile der Anschlussarmaturen des Standes der Technik nicht mehr auftreten und zugleich eine hohe Festigkeit der Lötverbindung zwischen Anschlussarmatur und Medienleitung geschaffen werden kann.

Die Aufgabe wird für eine Anschlussarmatur nach dem Oberbegriff des Anspruchs 1 dadurch gelöst, dass die Anschlussarmatur auf ihrer Innenseite zumindest eine axiale Begrenzungsfläche für die Medienleitung und benachbart dazu zumindest einen gestuften Abschnitt mit zumindest einer Stufe zum Auffügen des Lotrings zum stirnseitigen Verlöten der Medienleitung mit der Anschlussarmatur aufweist, wobei die Innenseite des zweiten Anschlussabschnitts, die zumindest eine Stufe zum Auffügen des Lotrings, die zumindest eine axiale Begrenzungsfläche und die dieser direkt benachbarte Innenseite des ersten Anschlussabschnitts als zweifach gestuftes Innenprofil der Anschlussarmatur ausgebildet ist, wobei die erste Stufe als Fläche in Axialrichtung der Anschlussarmatur die Innenseite von deren ersten Anschlussabschnitt aufweist, in den die Medienleitung eingeschoben wird, auf die axial verlaufende Fläche der zweiten Stufe, also deren Fläche in Axialrichtung der Anschlussarmatur, der Lotring aufgefügt wird, wobei die sich in radialer Richtung bezüglich der Erstreckung der Anschlussarmatur erstreckende Fläche zwischen den beiden Stufen die axiale Begrenzungsfläche ist, wobei der auf die zweite Stufe aufgefügte Lotring in Richtung der Medienleitung über die axiale Erstreckung der zweiten Stufe hinausragt, so dass die Stirnseite der Medienleitung an dem Lotring anliegt. Die Aufgabe wird ferner für eine konfektionierte Medienleitung mit zumindest einer rohr- und/oder schlauchförmigen Medienleitung und zumindest einer solchen Anschlussarmatur gelöst, wobei die rohr- und/oder schlauchförmige Medienleitung teilweise in die Anschlussarmatur eingefügt und mit dieser durch Verlöten verbunden ist. Die Aufgabe wird durch ein Verfahren zum Herstellen einer solchen konfektionierten Medienleitung gelöst, wobei auf zumindest eine erste Stufe eines gestuften Abschnitts im Innern der Anschlussarmatur zumindest ein Lotring aufgefügt und die rohr- und/oder schlauchförmige Medienleitung endseitig in einen ersten Anschlussabschnitt der Anschlussarmatur eingefügt
wird, wobei zwischen einer darin ausgebildeten axialen Begrenzungsfläche und der Stirnseite der Medienleitung ein Spalt belassen wird, wobei der Spalt dadurch gebildet wird, dass der Lotring in Axialrichtung der Anschlussarmatur über die Stufe in Richtung der Medienleitung vorsteht, so dass beim Einfügen der Medienleitung in die Anschlussarmatur bzw. deren ersten Anschlussabschnitt sich die Stirnseite der Medienleitung an dem Lotring anlegt, das Lot des Lotrings geschmolzen und durch das schmelzende Lot des Lotrings die Medienleitung zumindest stirnseitig mit der axialen Begrenzungsfläche verlötet wird. Weiterbildungen der Erfindung sind in den abhängigen Ansprüchen definiert.

Dadurch werden eine Anschlussarmatur sowie eine konfektionierte Medienleitung mit zumindest einer solchen Anschlussarmatur geschaffen, bei der einerseits eine axiale Begrenzungsfläche vorgesehen ist und andererseits benachbart dazu ein gestufter Abschnitt mit zumindest einer Stufe zum stirnseitigen Verlöten der Medienleitung mit der Anschlussarmatur vermittels eines Lotrings, der auf die Stufe aufgefügt wird. Hierdurch ist der Lotring bezüglich seiner Position in dem gestuften Abschnitt bzw. auf dessen zumindest einer Stufe in radialer und axialer Richtung durch deren radiale und deren axiale Begrenzungsfläche festgelegt. Zwischen der axialen Begrenzungsfläche und der Stirnseite der Medienleitung verbleibt vor dem Schmelzen des Lots des Lotrings ein kleiner Spalt, in den das geschmolzene Lot durch Kapillarwirkung einströmen bzw. eingesogen werden kann. Die axiale Begrenzungsfläche dient somit zur Begrenzung des Spalts auf der einen Seite und die Stirnseite der Medienleitung, die etwa parallel zur axialen Begrenzungsfläche angeordnet wird, zur Begrenzung des Spalts auf der gegenüberliegenden anderen Seite. Der Spalt kann so schmal dimensioniert werden, dass das geschmolzene Lot durch Kapillarwirkung in diesen eingesogen wird. Der schmale Spalt wird dadurch gebildet, dass der Lotring in Axialrichtung der Anschlussarmatur etwas über die Stufe in Richtung der Medienleitung vorsteht, so dass beim Einfügen der Medienleitung in die Anschlussarmatur bzw. deren ersten Anschlussabschnitt sich die Stirnseite der Medienleitung an dem Lotring anlegt. Um den Abstand bzw. Spalt zwischen der Stirnseite der in die Anschlussarmatur eingefügten Medienleitung und der axialen Begrenzungsfläche in der Anschlussarmatur zu schaffen, ist somit vorteilhaft die axiale Länge der Stufe des gestuften Abschnitts, auf die der Lotring aufgefügt
wird, kleiner als der Durchmesser des Lotrings dimensioniert. Die in die Anschlussarmatur eingefügte Medienleitung liegt dann nicht direkt an der axialen Begrenzungsfläche an, sondern stirnseitig an dem Lotring, so dass zwischen der Stirnseite der Medienleitung und der axialen Begrenzungsfläche der gewünschte Spalt zum Einströmen von Lot verbleibt, um die Medienleitung mit der Anschlussarmatur durch Löten zu verbinden. Ferner ist nicht nur dieser Spalt zwischen der Stirnseite der Medienleitung und der axialen Begrenzungsfläche der Anschlussarmatur vorgesehen, sondern auch ein Umfangsspalt zwischen der umfangsseitigen Außenseite der Medienleitung und der Innenseite des ersten Anschlussabschnitts. Beim Schmelzen des Lots des Lotrings breitet sich das Lot definiert aus und verbindet hierbei einerseits stirnseitig die Medienleitung stoffschlüssig mit der Anschlussarmatur. Andererseits tritt es in den Umfangsspalt ein, der zwischen der umfangsseitigen Außenseite der Medienleitung und der Innenseite des ersten Anschlussabschnitts der Anschlussarmatur vorgesehen ist, und verbindet auch dort die Medienleitung umfangsseitig stoffschlüssig mit der Anschlussarmatur.

Durch einerseits das stirnseitige Verlöten der Medienleitung an einer durch die Positionierung der axialen Begrenzungsfläche und der zumindest einen Stufe des gestuften Abschnitts, in dem der Lotring angeordnet wird, vorgegebenen Stelle und andererseits umfangsseitig in dem ersten Anschlussabschnitt der Anschlussarmatur wird eine hohe Festigkeit der Lötverbindung von Anschlussarmatur und rohr- und/oder schlauchförmiger Medienleitung geschaffen. Unter einer rohrförmigen Medienleitung wird eine stabile, wenig bis gar nicht flexible Medienleitung mit einem Rohrprofil und unter einer schlauchförmigen Medienleitung eine Flexiblität aufweisende Medienleitung verstanden. Eine rohr- und schlauchförmige Medienleitung weist zumindest einen rohrförmigen und zumindest einen schlauchförmigen Abschnitt auf.

Die rohr- und/oder schlauchförmige Medienleitung kann insbesondere ein Hydraulikrohr sein. Die Anschlussarmatur kann hierbei somit eine Hydraulikarmatur sein und zumindest eine Überwurfmutter umfassen. Dieses kann ein Normrohr, also eine rohrförmige Medienleitung mit einer Normgröße, sein, so dass im Unterschied zum Stand der Technik kostengünstige Normrohre hier verwendet werden können. Durch Vorsehen der zumindest einen Stufe des gestuften Abschnitts, auf die der zumindest eine Lotring aufgefügt werden kann/wird, ist eine definierte Position des Lotrings vorgegeben. Die Lotmenge kann ebenfalls über den Lotring vorgegeben werden, so dass reproduzierbar gute Verlötergebnisse erzielt werden können. Ferner ist es nicht erforderlich, die Anschlussarmatur bezüglich ihrer Wandstärke im Bereich des ersten Anschlussabschnitts und/oder des zweiten Anschlussabschnitts zu schwächen, um ein Verlöten mit der Medienleitung, insbesondere einem Hydraulikrohr, vornehmen zu können. Es werden lediglich die zumindest eine axiale Begrenzungsfläche und benachbart dazu die zumindest eine Stufe zum Auffügen eines Lotrings zum stirnseitigen Verlöten der Medienleitung mit der Anschlussarmatur vorgesehen. Weder durch die axiale Begrenzungsfläche noch durch die Stufe wird die Wandstärke der Anschlussarmatur geschwächt. Vielmehr wird nach dem stirn- und umfangsseitigen Verlöten von dieser mit der rohr- und/oder schlauchförmigen Medienleitung eine zusätzliche Stabilität erzeugt.

Vorteilhaft tritt das geschmolzene Lot endseitig am ersten Anschlussabschnitt durch den Umfangsspalt zwischen der Innenseite des ersten Anschlussabschnitts der Anschlussarmatur und der Außenseite der Medienleitung aus, so dass ein erfolgreicher Lötvorgang auch optisch überprüft werden kann. Durch das stirnseitige Verlöten der rohr- und/oder schlauchförmigen Medienleitung erhöht sich die tragende Wandstärke der Anschlussarmatur in diesem Bereich. Ferner reduziert sich durch das stirnseitige Verlöten der Medienleitung die druckbeaufschlagte Fläche von dieser. Durch die Verwendung eines Lotrings, der auf der zumindest einen Stufe des gestuften Anschnitts auf der Innenseite der Anschlussarmatur angeordnet wird, ist einerseits dessen Lage definiert und andererseits die Lotmenge, die zum Verlöten der Medienleitung zur Verfügung steht. Durch das Vorsehen der zumindest einen axialen Begrenzungsfläche ist ferner eine maximale und zugleich definierte Einlöttiefe, also axiale und radiale Positionierung, der Medienleitung insbesondere auch im dickwandigen Bereich der Anschlussarmatur vorgegeben. Der zum Einströmen von Lot zur Verfügung stehende Spalt zwischen der Stirnseite der Medienleitung und der axialen Begrenzungsfläche bzw. der Innenseite des ersten Anschlussabschnitts wird durch die axiale und radiale Abmessung der zumindest einen Stufe des gestuften Abschnitts genau definiert, so dass ein für jede Abmessung von Anschlussarmatur und Medienleitung passender Lötspalt erzeugt wird. Ferner ist dadurch der Lotring stets in genau definierter Position zur Stirnseite der Medienleitung positioniert, da diese eine Seite des Spalts bildet, der an der anderen Seite von der axialen Begrenzungsfläche begrenzt wird, wobei der Lotring auf der der axialen Begrenzungsfläche benachbarten Stufe aufgefügt wird.

Wie bereits erwähnt, ist die zumindest eine Stufe zum Auffügen des Lotrings so geformt und zur axialen Begrenzungsfläche positioniert, dass der Lotring vor dem Schmelzen stirnseitig an der Medienleitung anliegt und die Lotschmelze während des Verlötens zumindest zwischen die axiale Begrenzungsfläche und die Stirnseite der Medienleitung gelangt zum stirnseitigen Verlöten und somit stoffschlüssigen Verbinden der Medienleitung mit der Anschlussarmatur. Die Innenseite des zweiten Anschlussabschnitts, die zumindest eine Stufe zum Auffügen des Lotrings, die zumindest eine axiale Begrenzungsfläche und die dieser direkt benachbarte Innenseite des ersten Anschlussabschnitts sind als zweifach gestuftes Innenprofil der Anschlussarmatur ausgebildet. Die erste Stufe weist als Fläche in Axialrichtung der Anschlussarmatur die Innenfläche von deren ersten Anschlussabschnitt auf, in den die Medienleitung eingeschoben wird. Auf die axial verlaufende Fläche der zweiten Stufe, also deren Fläche in Axialrichtung der Anschlussarmatur, wird der Lotring aufgefügt. Die sich in radialer Richtung (bezüglich der Erstreckung der Anschlussarmatur) erstreckende Fläche zwischen den beiden Stufen ist die axiale Begrenzungsfläche. Die axial verlaufenden Flächen der ersten und der zweiten Stufe und die axiale Begrenzungsfläche stehen zumeist etwa senkrecht aufeinander. Der auf die zweite Stufe aufgefügte Lotring ragt in Richtung der Medienleitung über die axiale Erstreckung der zweiten Stufe hinaus, so dass die Stirnseite der Medienleitung an dem Lotring anliegt.

Der Übergang der zueinander rechtwinklig angeordneten Flächen der zumindest einen Stufe, der axial verlaufenden, zum Auffügen eines Lotrings vorgesehenen Fläche von dieser und der axialen Begrenzungsfläche, kann als Kante, Verrundung und/oder Fase ausgebildet sein. Anstelle einer Kante zwischen den zueinander rechtwinklig angeordneten Flächen der zweiten Stufe, der axial verlaufenden Fläche von dieser, auf der der Lotring aufgefügt wird, und der axialen Begrenzungsfläche, kann somit zumindest eine Verrundung und/oder eine Fase dort zwischen der axial verlaufenden Fläche zum Auffügen des Lotrings und der axialen Begrenzungsfläche vorgesehen sein. Der Radius der Verrundung bzw. die Länge und der Winkel der Fase zur axialen Begrenzungsfläche werden dabei vorteilhaft so gewählt werden, dass beim Schmelzen das Lot des Lotrings weiterhin in den Spalt zwischen der Stirnseite der Medienleitung und der axialen Begrenzungsfläche einströmen und sich das Lot ebenfalls im Umfangsspalt zwischen der umfangsseitigen Außenseite der Medienleitung und der Innenseite des ersten Anschlussabschnitts ausbreiten kann zum stoffschlüssigen Verbinden von rohr- und/oder schlauchförmiger Medienleitung und Anschlussarmatur miteinander.

Die Wandstärke der Umfangswandung der Medienleitung entspricht vorteilhaft zumindest der radialen Höhe der axialen Begrenzungsfläche, um ein stabiles stirnseitiges Verlöten der Medienleitung mit der Anschlussarmatur zu ermöglichen. Nach dem Einfügen der Medienleitung in den ersten Anschlussabschnitt der Anschlussarmatur kann die Innenseite der Medienleitung je nach Wandstärke der Medienleitung dabei mit der Innenseite der Anschlussarmatur im Bereich des zweiten Anschlussabschnitts etwa fluchten. Der Innendurchmesser der Medienleitung und der Anschlussarmatur im Bereich von deren zweiten Anschlussabschnitt entsprechen dabei etwa einander. Ebenfalls ist es möglich, dass die Medienleitung eine solche Wandstärke aufweist, dass sie in das Innere der Anschlussarmatur im Bereich des ersten Anschlussabschnitts von dieser in radialer Richtung weiter hineinragt, somit nicht mit der Innenseite des zweiten Anschlussabschnitts der Anschlussarmatur fluchtet. Der Innendurchmesser der Anschlussarmatur im Bereich von deren zweiten Anschlussabschnitt und der Innendurchmesser der Medienleitung wären in diesem Falle nicht gleich, sondern vielmehr der Innendurchmesser der Medienleitung kleiner als der Innendurchmesser der Anschlussarmatur im Bereich von deren zweiten Anschlussabschnitt. In jedem Falle weist die Medienleitung jedoch eine solche Wandstärke auf, dass sie in axialer Richtung mit ihrer Stirnseite eine Begrenzungsfläche bildet, die zusammen mit der axialen Begrenzungsfläche der Anschlussarmatur einen Ringspalt zum Einströmen von Lot des Lotrings bei dessen Schmelzen bildet.

Der zumindest eine zweite Anschlussabschnitt kann z.B. kegelförmig ausgebildet, insbesondere ein Dichtkegelabschnitt, sein, somit auf seiner Außenseite in Richtung zum distalen Ende des zweiten Anschlussabschnitts hin kegelförmig zulaufen und auf seiner Innenseite z.B. zylindrisch ausgebildet sein. Außenseitig auf dem kegelförmigen zweiten Anschlussabschnitt in Form eines Dichtkegelabschnitts kann beispielsweise zumindest eine Nut zum Einfügen eines Dichtelements, wie eines Dichtrings, vorgesehen sein.

Zum Verbinden von Anschlussarmatur und Medienleitung wird zunächst auf die zumindest eine Stufe des gestuften Abschnitts im Innern der Anschlussarmatur, also deren sich in deren Axialrichtung erstreckende axiale Fläche, zumindest ein Lotring aufgefügt und danach die rohr- und/oder schlauchförmige Medienleitung endseitig in den ersten Anschlussabschnitt der Anschlussarmatur bis kurz vor Erreichen der darin ausgebildeten axialen Begrenzungsfläche eingefügt. Der in Axialrichtung über die radiale Begrenzungsfläche in Richtung der Medienleitung vorstehende Lotring verhindert ein Anlegen der Stirnseite der Medienleitung an der axialen Begrenzungsfläche. Das Lot des Lotrings wird z.B. durch Erhitzen der Anschlussarmatur geschmolzen. Das schmelzende Lot des Lotrings strömt in den Spalt zwischen der axialen Begrenzungsfläche und der Stirnseite der Medienleitung und verbindet sich mit dieser und dem Material der Anschlussarmatur stoffschlüssig. Ferner strömt das schmelzende Lot auch in den ringförmigen umfangsseitigen Umfangsspalt zwischen der Außenseite der Medienleitung und der Innenseite des ersten Anschlussabschnitts der Anschlussarmatur hinein. Ein vollständiges Verlöten kann optisch daran erkannt werden, dass das Lot, wie bereits erwähnt, endseitig am ersten Anschlussabschnitt der Anschlussarmatur zwischen dieser und der Außenseite der Medienleitung aus dem Umfangsspalt austritt. Das Lot des Lotrings gelangt somit beim Schmelzen zwischen die Außenseite der Medienleitung und die Innenseite des ersten Anschlussabschnitts der Anschlussarmatur und verbindet nach dem Erkalten stirnseitig und auch umfangsseitig die Medienleitung stoffschlüssig mit der Anschlussarmatur im Bereich des ersten Anschlussabschnitts der Anschlussarmatur, in den der entsprechende endseitige Abschnitt der Medienleitung eingefügt ist.

Zur näheren Erläuterung der Erfindung wird im Folgenden ein Ausführungsbeispiel von dieser näher anhand der Zeichnungen beschrieben. Diese zeigen in:
- Figur 1: eine teilweise geschnittene Seitenansicht einer rohrförmigen Medienleitung, eingefügt in eine erfindungsgemäße Anschlussarmatur, die eine Überwurfmutter aufweist,
- Figur 2: eine Längsschnittansicht der Anschlussarmatur gemäß Figur 1 ohne Überwurfmutter,
- Figur 3: eine Längsschnittansicht durch die Anordnung von rohrförmiger Medienleitung und Anschlussarmatur gemäß Figur 1,
- Figur 4: eine Detailschnittansicht in Längsrichtung einer alternativen Ausführungsform einer erfindungsgemäßen Anschlussarmatur, in die eine rohrförmige Medienleitung eingefügt ist, wobei letztere eine größere Wandstärke als die rohrförmige Medienleitung gemäß Figur 1 und 3 aufweist, und
- Figur 5: eine Längsschnittansicht durch eine erfindungsgemäße konfektionierte Medienleitung erzeugt durch Verlöten der erfindungsgemäßen Anschlussarmatur und der rohrförmigen Medienleitung gemäß Figur 3.

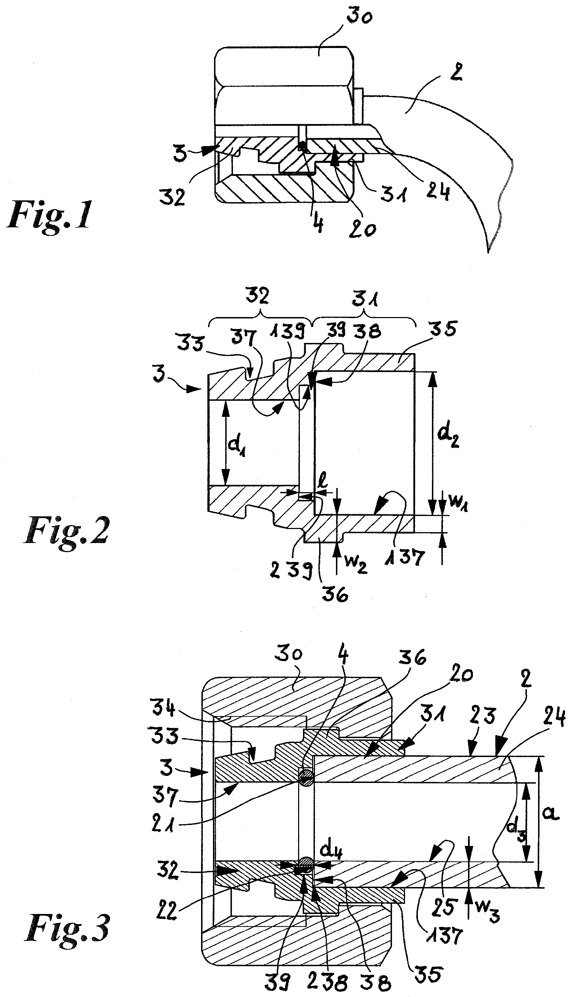

Figur 1 zeigt eine rohrförmige Medienleitung 2 in Form eines Hydraulikrohres und eine Anschlussarmatur 3, die endseitig auf die rohrförmige Medienleitung 2 aufgebracht ist und mit dieser durch Verlöten stoffschlüssig verbunden werden soll. Zu diesem Zweck ist ein Lotring 4 vorgesehen. In Figur 3 ist die Anordnung gemäß Figur 1 als Längsschnittansicht gezeigt. Wie dieser besser entnommen werden kann, umfasst die Anschlussarmatur eine außenseitige Überwurfmutter 30, einen ersten Anschlussabschnitt 31 und einen hier beispielhaft kegelförmigen zweiten Anschlussabschnitt 32. Die rohrförmige Medienleitung 2 ist mit ihrem Ende 20 (siehe Figur 1) in den ersten Anschlussabschnitt 31 der Anschlussarmatur 3 eingefügt. Die Anschlussarmatur 3 ohne Überwurfmutter 30 ist im Detail auch Figur 2 zu entnehmen. Aus dieser geht besonders gut hervor, dass die Anschlussarmatur 3 einteilig ausgebildet ist, wobei der kegelförmige zweite Anschlussabschnitt 32 außenseitig eine umlaufende Nut 33 aufweist, in die ein O-Ring als Dichtring eingeführt werden kann. Der kegelförmige zweite Anschlussabschnitt 32 wird dementsprechend auch als Dichtkegelabschnitt bezeichnet. Er dient zum Eingreifen in ein Gegenstück, wie eine zweite Medienleitung, eine andere Anschlussarmatur mit einem entsprechenden Kupplungsabschnitt, der den kegelförmigen zweiten Anschlussabschnitt 32 übergreift, oder ein Aggregat, das dort angeschlossen wird. Anstelle eines kegelförmigen zweiten Anschlussabschnitts 32 kann dieser auch eine andere Formgebung aufweisen. Die Überwurfmutter 30 weist im Bereich des kegelförmigen zweiten Anschlussabschnitts ein Innengewinde 34 auf, das mit einem Außengewinde eines entsprechenden Kupplungsstücks oder einer anderen Anschlussarmatur durch Verschrauben gefügt werden kann.

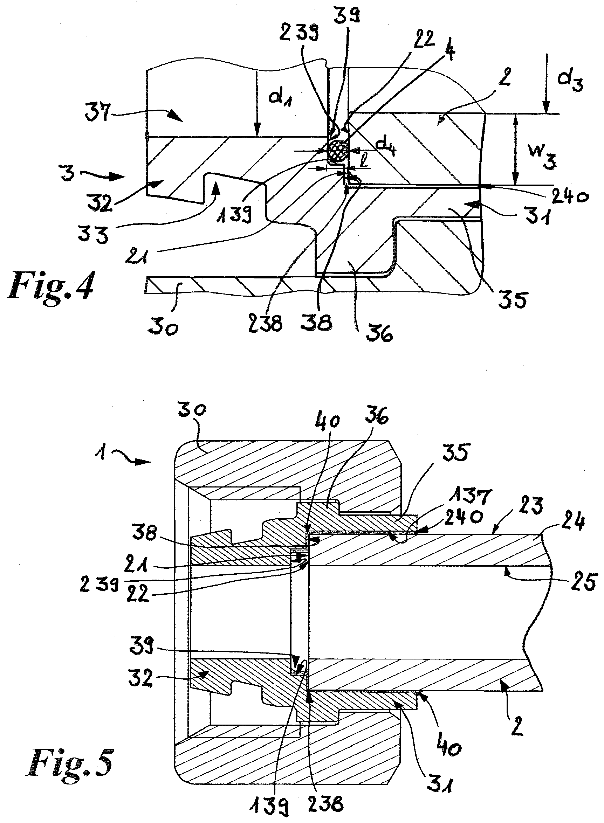

Im Inneren der Anschlussarmatur 3 ist der kegelförmige zweite Anschlussabschnitt 32 mit einem Innendurchmesser d₁ versehen. Der erste Anschlussabschnitt 31 weist eine umlaufende Wandung 35 auf. Diese ist im Übergangsbereich zum kegelförmigen zweiten Anschlussabschnitt 32 aufgedickt als ringförmiger vorkragender umlaufender Wandungsteil bzw. Bund 36 ausgebildet. Die Wandstärke w₁ des ersten Anschlussabschnitts 31 im Bereich der umlaufenden Wandung 35 ist somit geringer als die Wandstärke w₂ im Bereich des ringförmigen vorkragenden umlaufenden Wandungsteils 36. Der ringförmige vorkragende umlaufende Wandungsteil bzw. Bund 36 zwischen dem ersten Anschlussabschnitt 31 und dem zweiten Anschlussabschnitt 32 dient zum axialen Halt der Überwurfmutter 30 bzw. deren Abstützen. Wie besonders gut Figur 2 weiter entnommen werden kann, ist in dem Bereich der größeren Wandstärke w₂ auf der Innenseite 37, 137 der Anschlussarmatur 3 ein Versatz durch eine axiale Begrenzungsfläche 38 und eine benachbart hierzu angeordnete Stufe 39 ausgebildet. Die axiale Länge l der Stufe 39 wird durch die axiale Begrenzungsfläche 38 und eine zu dieser etwa parallel, versetzt verlaufende axiale Begrenzungsfläche 239 begrenzt, wobei die beiden axialen Begrenzungsflächen 38, 239 etwa senkrecht zu der Erstreckung der Stufe 39 bzw. deren radiale Begrenzungsfläche 139 verlaufen. Zwischen diesen Flächen 139 und 38 ist somit eine Kante gebildet. Anstelle derer kann der Übergang zwischen diesen Flächen jedoch auch verrundet und/oder dort eine Fase vorgesehen sein. Eine zur axialen Begrenzungsfläche 239 benachbarte Stufe wird durch die Erstreckung der Innenseite 37 im Bereich des zweiten Anschlussabschnitts 32 der Anschlussarmatur 3 gebildet. Die Innenseite 37 des zweiten Anschlussabschnitts 32 der Anschlussarmatur 3 geht somit zweifach gestuft in die Innenseite 137 des ersten Anschlussabschnitts 31 von dieser über. Der Übergang von dem Innendurchmesser d₁ im Bereich des kegelförmigen zweiten Anschlussabschnitts 32 zu dem Innendurchmesser d₂ im Bereich des ersten Anschlussabschnitts 31 ist somit zweistufig vorgesehen. Der Innendurchmesser d₂ des ersten Anschlussabschnitts 31 entspricht etwa dem Außendurchmesser a der rohrförmigen Medienleitung 2, wie Figur 2 und 3 entnommen werden kann. Die Wandstärke w₃ der rohrförmigen Medienleitung 2 entspricht etwa der halben Differenz zwischen dem Innendurchmesser d₂ und dem Innendurchmesser d₁ mit w₃ ≈ ((d₂ - d₁) : 2), so dass der Innendurchmesser d₃ der rohrförmigen Medienleitung 2 etwa gleich dem Innendurchmesser d₁ des kegelförmigen zweiten Anschlussabschnitts 32 ist und die Innenflächen der rohrförmigen Medienleitung 2 und des kegelförmigen zweiten Anschlussabschnitts 32 etwa miteinander fluchten. Dies kann beispielsweise Figur 3 und Figur 5 entnommen werden.

Wie beispielhaft Figur 4 entnommen werden kann, kann die Wandstärke w₃ der rohrförmigen Medienleitung 2 auch z.B. größer ausgebildet werden, so dass der Innendurchmesser d₃ der rohrförmigen Medienleitung geringer als der Innendurchmesser d₁ im Bereich des kegelförmigen zweiten Anschlussabschnitts 32 der Anschlussarmatur 3 ist. Auch der umgekehrte Fall ist grundsätzlich möglich, wobei jedoch der die axiale Begrenzungsfläche 38 überragende Abschnitt 22 der Stirnseite 21 der rohrförmigen Medienleitung 2 zumindest so groß sein sollte, dass das schmelzende Lot 40 des Lotrings 4 davon abgehalten wird, sich auf der oder nur auf der Innenseite 25 der Medienleitung 2 zu verteilen, da die Medienleitung 2 stirnseitig mit der Anschlussarmatur 3 stoffschlüssig verbunden werden soll.

Der Lotring 4 wird auf die Stufe 39 aufgefügt. Anschließend wird die rohrförmige Medienleitung 2 so weit in den ersten Anschlussabschnitt 31 der Anschlussarmatur 3 eingeschoben, dass die Stirnseite 21 der rohrförmigen Medienleitung 2 an dem Lotring 4 anliegt. Die axiale Länge I der Stufe 39 ist kleiner als der Durchmesser d₄ des Lotrings 4, um einen Spalt 238 zwischen der Stirnseite 21 der in die Anschlussarmatur 3 eingefügten Medienleitung 2 und der axialen Begrenzungsfläche 38 zu schaffen. Somit liegt die Stirnseite 21 der Medienleitung 2 nach deren Einfügen in die Anschlussarmatur 3 bzw. deren ersten Anschlussabschnitt 31 an dem Lotring 4 beabstandet zu der axialen Begrenzungsfläche 38 der Anschlussarmatur 3 an, unter Belassen eines geringen Spalts 238 zu dieser. Dies ist insbesondere den Figuren 1, 3 und 4 zu entnehmen. Der Lotring 4 liegt in einer definierten Position auf der Stufe 39, aufliegend auf deren radialer Begrenzungsfläche 139 und in Axialrichtung anliegend an der axialen Begrenzungsfläche 239 der Stufe 39.

Wird nun das Lot 40 des Lotrings geschmolzen, gelangt es in den Spalt zwischen der Stirnseite 21 und der Außenseite 23 der rohrförmigen Medienleitung 2 und der axialen Begrenzungsfläche 38 und der Innenseite 137 der Anschlussarmatur 3 im Bereich von deren ersten Anschlussabschnitt 31. In den Spalt 238 wird das Lot 40 durch Kapillarwirkung eingesogen, gelangt durch den Umfangsspalt 240 zwischen der umfangsseitigen Außenseite 23 der Medienleitung 2 und der Innenseite 137 des ersten Anschlussabschnitts 31 bis zum Ende des ersten Anschlussabschnitts 31 und tritt dort aus dem Umfangsspalt 240 zwischen Anschlussarmatur 3 bzw. deren ersten Anschlussabschnitt 31 und der Außenseite 23 der rohrförmigen Medienleitung 2 aus. Dies kann Figur 5 entnommen werden. Auf der Stufe 39 verteilt sich das Lot 40 des Lotrings 4 zumindest teilweise auch auf deren radialer Begrenzungsfläche 139. Es wird somit eine stoffschlüssige Verbindung der rohrförmigen Medienleitung 2 und der Anschlussarmatur 3 im Bereich von deren axialer Begrenzungsfläche 38 und entlang dem ersten Anschlussabschnitt 31 der Anschlussarmatur 3 geschaffen. Durch das dort am Ende der Anschlussarmatur 3 aus dem Umfangsspalt 240 zwischen dieser und der Außenseite 23 der Medienleitung 2 austretende Lot 40 ist eine optische Kontrolle eines erfolgreichen Verlötens von rohrförmiger Medienleitung 2 und Anschlussarmatur 3 beim Ausbilden einer konfektionierten Medienleitung 1 möglich.

Durch die Verwendung des Lotrings 4 ist die zum Verlöten vorgesehene Lotmenge vorbestimmt bzw. definiert und durch das Vorsehen der Stufe 39 auch die Position des Lotrings 4 vorgegeben, so dass eine reproduzierbare optimale Verlötung und somit stoffschlüssige Verbindung von rohrförmiger Medienleitung 2 und Anschlussarmatur 3 ermöglicht wird. Durch das stirnseitige Verlöten der rohrförmigen Medienleitung 2 im Bereich der Stirnseite 21 von dieser mit der Anschlussarmatur 3 im Bereich von deren axialer Begrenzungsfläche 38 wird die tragende Wandstärke dort vergrößert, was sich insbesondere ebenfalls aus Figur 5 ohne Weiteres ergibt. Die maximale Einlöttiefe der rohrförmigen Medienleitung 2 im Inneren der Anschlussarmatur 3 wird durch das Vorsehen der axialen Begrenzungsfläche 38 und durch den Durchmesser d₄ des Lotrings 4 sowie die axiale Länge l der Stufe 39 vorgegeben (siehe Figur 2 und 3). Ferner kann durch das stirnseitige Verlöten im Bereich der Stirnseite 21 der rohrförmigen Medienleitung 2 gerade bei der Ausführungsvariante nach den Figuren 1 bis 3 und 5 die druckbeauftragte Fläche der Medienleitung 2 reduziert werden. Es kann somit eine hohe Festigkeit der Lötverbindung von rohrförmiger Medienleitung 2 und Anschlussarmatur 3 geschaffen werden.

Die konfektionierte Medienleitung 1 eignet sich nicht nur für den Hydraulikbereich, wobei die Anschlussarmatur dann eine Hydraulikarmatur ist und die rohrförmige Medienleitung ein Hydraulikrohr, sondern auch für andere fluidische Systeme, bei denen insbesondere eine hohe Druckbeaufschlagung der Verbindung von rohrförmiger Medienleitung 2 und Anschlussarmatur 3 auftritt.

Neben den im Vorstehenden beschriebenen und in den Figuren gezeigten Ausführungsvarianten einer Anschlussarmatur mit zumindest einem Anschlussabschnitt zum Anschließen und Befestigen einer rohr- und/oder schlauchförmigen Medienleitung und zumindest einem zweiten Anschlussabschnitt, wie insbesondere einem Dichtkegelabschnitt, zum Verbinden mit einer anderen Anschlussarmatur einer anderen Medienleitung oder einem Aggregat können noch zahlreiche weitere gebildet werden, wie in den angehängten Ansprüchen definiert, wobei jeweils die Anschlussarmatur auf ihrer Innenseite zumindest eine axialen Begrenzungsfläche für die rohr- und/oder schlauchförmige Medienleitung und benachbart dazu zumindest einen gestuften Abschnitt mit zumindest einer Stufe zum Auffügen eines Lotrings zum stirnseitigen Verlöten der Medienleitung mit der Anschlussarmatur aufweist.

### Bezugszeichenliste

- 1: konfektionierte Medienleitung
- 2: rohrförmige Medienleitung
- 3: Anschlussarmatur
- 4: Lotring
- 20: Ende
- 21: Stirnseite
- 22: Abschnitt von 21
- 23: Außenseite
- 24: Wandung
- 25: Innenseite
- 30: Überwurfmutter
- 31: erster Anschlussabschnitt
- 32: kegelförmiger zweiter Anschlussabschnitt
- 33: umlaufende Nut
- 34: Innengewinde
- 35: umlaufende Wandung von 31
- 36: ringförmiger vorkragender umlaufender Wandungsteil/Bund
- 37: Innenseite von 32
- 38: axiale Begrenzungsfläche
- 39: Stufe
- 40: Lot
- 137: Innenseite bei 31
- 139: radiale Begrenzungsfläche von 39
- 238: Spalt zwischen 21 und 38
- 239: axiale Begrenzungsfläche von 39
- 240: Umfangsspalt
- a: Außendurchmesser von 2
- d₁: Innendurchmesser von 32
- d₂: Innendurchmesser von 31
- d₃: Innendurchmesser von 2
- d₄: Durchmesser von 4
- I: axiale Länge von 39
- w1: Wandstärke von 31
- w2: Wandstärke bei 36
- w3: Wandstärke von 2

## Patentansprüche

1. Anschlussarmatur (3) mit zumindest einem ersten Anschlussabschnitt (31) zum Anschließen und Befestigen einer rohr- und/oder schlauchförmigen Medienleitung (2) und zumindest einem zweiten Anschlussabschnitt (32) zum Verbinden mit einer anderen Medienleitung oder einem Aggregat, und einem Lotring (4),
**dadurch gekennzeichnet, dass**
die Anschlussarmatur (3) auf ihrer Innenseite (37, 137) zumindest eine axiale Begrenzungsfläche (38) für die Medienleitung (2) und benachbart dazu zumindest einen gestuften Abschnitt mit zumindest einer Stufe (39) zum Auffügen des Lotrings (4) zum stirnseitigen Verlöten der Medienleitung (2) mit der Anschlussarmatur (3) aufweist, wobei die Innenseite (37) des zweiten Anschlussabschnitts (32), die zumindest eine Stufe (39) zum Auffügen des Lotrings (4), die zumindest eine axiale Begrenzungsfläche (38) und die dieser direkt benachbarte Innenseite (137) des ersten Anschlussabschnitts (31) als zweifach gestuftes Innenprofil der Anschlussarmatur (3) ausgebildet ist, wobei die erste Stufe als Fläche in Axialrichtung der Anschlussarmatur (3) die Innenseite (137) von deren ersten Anschlussabschnitt (31) aufweist, in den die Medienleitung (2) eingeschoben wird, auf die axial verlaufende Fläche der zweiten Stufe (39), also deren Fläche (139) in Axialrichtung der Anschlussarmatur (3), der Lotring (4) aufgefügt wird, wobei die sich in radialer Richtung bezüglich der Erstreckung der Anschlussarmatur (3) erstreckende Fläche zwischen den beiden Stufen die axiale Begrenzungsfläche (38) ist, wobei der auf die zweite Stufe (39) aufgefügte Lotring (4) in Richtung der Medienleitung (2) über die axiale Erstreckung (I) der zweiten Stufe (39) hinausragt, so dass die Stirnseite (21) der Medienleitung (2) an dem Lotring (4) anliegt.

2. Anschlussarmatur (3) nach Anspruch 1,
**dadurch gekennzeichnet, dass**
die zumindest eine Stufe (39) zum Auffügen eines Lotrings (4) so geformt und zur axialen Begrenzungsfläche (38) positioniert ist, dass der darauf aufgefügte Lotring (4) vor dem Schmelzen stirnseitig an der Medienleitung (2) anliegt und das Lot (40) während des Verlötens in zumindest einen Spalt (238) zwischen der axialen Begrenzungsfläche (38) und der Stirnseite (21) der Medienleitung (2) gelangt zum stirnseitigen Verlöten der Medienleitung (2) mit der Anschlussarmatur (3).

3. Anschlussarmatur (3) nach Anspruch 1 oder 2,
**dadurch gekennzeichnet, dass**
die axiale Länge (I) der Stufe (39) kleiner ist als der Durchmesser (d₄) des Lotrings (4) zum Schaffen des Spalts (238) zwischen der Stirnseite (21) einer in die Anschlussarmatur (3) eingefügten Medienleitung (2) und der axialen Begrenzungsfläche (38).

4. Anschlussarmatur (3) nach einem der vorstehenden Ansprüche,
**dadurch gekennzeichnet, dass**
die Anschlussarmatur (3) eine Hydraulikarmatur ist und zumindest eine Überwurfmutter (30) umfasst und die rohr- und/oder schlauchförmige Medienleitung (2) ein Hydraulikrohr ist.

5. Anschlussarmatur (3) nach einem der vorstehenden Ansprüche,
**dadurch gekennzeichnet, dass**
der zumindest eine zweite Anschlussabschnitt (32) kegelförmig,
insbesondere ein Dichtkegelabschnitt, ist.

6. Anschlussarmatur (3) nach einem der vorstehenden Ansprüche,
**dadurch gekennzeichnet, dass**
der Übergang der zueinander rechtwinklig angeordneten Flächen der zumindest einen Stufe (39), der axial verlaufenden, zum Auffügen eines Lotrings (4) vorgesehenen Fläche (139) von dieser und der axialen Begrenzungsfläche (38), als Kante, Verrundung und/oder Fase ausgebildet ist.

7. Konfektionierte Medienleitung (1) mit zumindest einer rohr- und/oder schlauchförmigen Medienleitung (2) und zumindest einer Anschlussarmatur (3) nach einem der vorstehenden Ansprüche, wobei die rohr- und/oder schlauchförmige Medienleitung (2) teilweise in die Anschlussarmatur (3) eingefügt und mit dieser durch Verlöten verbunden ist.

8. Verfahren zum Herstellen einer konfektionierten Medienleitung (1) nach Anspruch 17, umfassend zumindest eine rohr- und/oder schlauchförmige Medienleitung (2) und zumindest eine Anschlussarmatur (3) nach einem der Ansprüche 1 bis 6,
**dadurch gekennzeichnet, dass**
auf zumindest eine Stufe (39) eines gestuften Abschnitts im Innern der Anschlussarmatur (3) zumindest ein Lotring (4) aufgefügt und die rohr- und/oder schlauchförmige Medienleitung (2) endseitig in einen ersten Anschlussabschnitt (31) der Anschlussarmatur (3) eingefügt wird, wobei zwischen einer darin ausgebildeten axialen Begrenzungsfläche (38) und der Stirnseite (21) der Medienleitung (2) ein Spalt (238) belassen wird, wobei der Spalt (238) dadurch gebildet wird, dass der Lotring (4) in Axialrichtung der Anschlussarmatur (3) über die Stufe (39) in Richtung der Medienleitung (2) vorsteht, so dass beim Einfügen der Medienleitung (2) in die Anschlussarmatur (3) bzw. deren ersten Anschlussabschnitt (31) sich die Stirnseite (21) der Medienleitung (2) an dem Lotring (4) anlegt, das Lot des Lotrings (4) geschmolzen und durch das schmelzende und in den Spalt (238) gelangende Lot (40) des Lotrings (4) die Medienleitung (2) zumindest stirnseitig mit der axialen Begrenzungsfläche (38) verlötet wird.

9. Verfahren nach Anspruch 8,
**dadurch gekennzeichnet, dass**
das Lot (40) des Lotrings (4) beim Schmelzen zwischen die Außenseite (23) der Medienleitung (2) und die Innenseite (137) des ersten Anschlussabschnitts (31) der Anschlussarmatur (3) gelangt und das Lot (40) nach dem Erkalten die Medienleitung (2) stoffschlüssig mit der Anschlussarmatur (3) stirnseitig und umfangsseitig entlang dem in dem ersten Anschlussabschnitt (31) der Anschlussarmatur (3) aufgenommenen Abschnitt der Medienleitung (2) verbindet.

## Claims

1. Connection fitting (3) having at least one first connection portion (31) for the connection and fixing of a tubular and/or hose-shaped media line (2), and at least one second connection portion (32) for connection to another media line or to an assembly, and a solder ring (4),
**characterised in that**
the connection fitting (3) has on its inner side (37, 137) at least one axial boundary surface (38) for the media line (2) and, adjacent thereto, at least one stepped portion having at least one step (39) for attachment of the solder ring (4) for soldering the media line (2) to the connection fitting (3), wherein the inner side (37) of the second connection portion (32), the at least one step (39) for attachment of the solder ring (4), the at least one axial boundary surface (38) and the inner side (137), directly adjacent thereto, of the first connection portion (31) is configured as a double-stepped inner profile of the connection fitting (3), wherein the first step has as a surface in the axial direction of the connection fitting (3) the inner side (137) of the first connection portion (31) thereof, into which the media line (2) is inserted, the solder ring (4) is attached to the axially extending surface of the second step (39), that is to say the surface (139) in the axial direction of the connection fitting (3), wherein the surface between the two steps extending in the radial direction with respect to the extent of the connection fitting (3) is the axial boundary surface (38), wherein the solder ring (4) attached to the second step (39) projects beyond the axial extent (l) of the second step (39) in the direction towards the media line (2), so that the end face (21) of the media line lies against the solder ring (4).

2. Connection fitting (3) according to claim 1,
**characterised in that**
the at least one step (39) for attachment of a solder ring (4) is so shaped and positioned relative to the axial boundary surface (38) that, prior to melting, the solder ring (4) attached thereto lies at its end face against the media line (2) and, during soldering, the solder (40) enters at least one gap (238) between the axial boundary surface (38) and the end face (21) of the media line (2) in order to solder the media line (2) at its end face to the connection fitting (3).

3. Connection fitting (3) according to claim 1 or 2,
**characterised in that**
the axial length (l) of the step (39) is smaller than the diameter (d₄) of the solder ring (4) in order to create the gap (238) between the end face (21) of a media line (2) inserted into the connection fitting (3) and the axial boundary surface (38).

4. Connection fitting (3) according to any one of the preceding claims,
**characterised in that**
the connection fitting (3) is a hydraulic fitting and comprises at least one union nut (30), and the tubular and/or hose-shaped media line (2) is a hydraulic pipe.

5. Connection fitting (3) according to any one of the preceding claims,
**characterised in that**
the at least one second connection portion (32) is cone-shaped, in particular is a sealing cone portion.

6. Connection fitting (3) according to any one of the preceding claims,
**characterised in that**
the transition of the surfaces, arranged at right angles to one another, of the at least one step (39), of the axially extending surface (139) thereof provided for attachment of a solder ring (4) and of the axial boundary surface (38) is in the form of a corner, a rounded portion and/or a chamfer.

7. Prefabricated media line (1) having at least one tubular and/or hose-shaped media line (2) and at least one connection fitting (3) according to any one of the preceding claims, wherein the tubular and/or hose-shaped media line (2) is inserted in part into the connection fitting (3) and is connected thereto by soldering.

8. Method for producing a prefabricated media line (1) according to claim 7, comprising at least one tubular and/or hose-shaped media line (2) and at least one connection fitting (3) according to any one of claims 1 to 6,
**characterised in that**
at least one solder ring (4) is attached to at least one step (39) of a stepped portion in the interior of the connection fitting (3) and the tubular and/or hose-shaped media line (2) is inserted at its end into a first connection portion (31) of the connection fitting (3), wherein a gap (238) is left between an axial boundary surface (38) formed therein and the end face (21) of the media line (2), wherein the gap (238) is formed **in that** the solder ring (4) projects in the axial direction of the connection fitting (3) beyond the step (39) in the direction towards the media line (2) so that, on insertion of the media line (2) into the connection fitting (3), or the first connection portion (31) thereof, the end face (21) of the media line (2) lies against the solder ring (4), the solder of the solder ring (4) is melted, and the media line (2) is soldered at least at its end face to the axial boundary surface (38) by the melting solder (40) of the solder ring (4) entering the gap (238).

9. Method according to claim 8,
**characterised in that**
when the solder (40) of the solder ring (4) melts, it passes between the outer side (23) of the media line (2) and the inner side (137) of the first connection portion (31) of the connection fitting (3) and, after cooling, the solder (40) connects the media line (2) to the connection fitting (3) by substance-to-substance bonding at the end face and circumferentially along the portion of the media line (2) that has been received in the first connection portion (31) of the connection fitting (3).

## Revendications

1. Connecteur de raccordement (3) avec au moins une première section de raccordement (31) pour raccorder et fixer une conduite de fluide (2) en forme de tube et/ou de tuyau et au moins une deuxième section de raccordement (32) à relier à une autre conduite de fluide ou un groupe, et une bague de brasage (4),
**caractérisé en ce que**
le connecteur de raccordement (3) présente sur sa face intérieure (37, 137) au moins une surface de limitation axiale (38) pour la conduite de fluide (2) et au voisinage de celle-ci au moins une section étagée avec au moins un étage (39) pour la mise en place de la bague de brasage (4) pour le brasage frontal de la conduite de fluide (2) avec le connecteur de raccordement (3), dans lequel la face intérieure (37) de la deuxième section de raccordement (32), l'au moins un étage (39) pour la mise en place de la bague de brasage (4), l'au moins une surface de limitation axiale (38) et la face intérieure (137) directement au voisinage de celle-ci de la première section de raccordement (31) sont réalisées en tant que profilé intérieur à deux étages du connecteur de raccordement (3), dans lequel le premier étage présente en tant que surface dans la direction axiale du connecteur de raccordement (3) la face intérieure (137) de la première section de raccordement (31) de celui-ci dans laquelle la conduite de fluide (2) est insérée, la bague de brasage (4) est mise en place sur la surface s'étendant axialement du deuxième étage (39), c'est-à-dire la surface (139) de celui-ci dans la direction axiale du connecteur de raccordement (3), dans lequel la surface s'étendant dans la direction radiale par rapport à l'extension du connecteur de raccordement (3) entre les deux étages est la surface de limitation axiale (38), dans lequel la bague de brasage (4) mise en place sur le deuxième étage (39) fait saillie de l'extension axiale (1) du deuxième étage (39) dans la direction de la conduite de fluide (2), de sorte que la face frontale (21) de la conduite de fluide (2) repose contre la bague de brasage (4).

2. Connecteur de raccordement (3) selon la revendication 1,
**caractérisé en ce que**
l'au moins un étage (39) pour la mise en place d'une bague de brasage (4) est formé et positionné par rapport à la surface de limitation axiale (38) de sorte que la bague de brasage (4) mise en place sur celui-ci repose frontalement contre la conduite de fluide (2) avant la fusion et le métal d'apport (40) parvient pendant le brasage dans au moins une fente (238) entre la surface de limitation axiale (38) et la face frontale (21) de la conduite de fluide (2) pour le brasage sur la face frontale de la conduite de fluide (2) avec le connecteur de raccordement (3).

3. Connecteur de raccordement (3) selon la revendication 1 ou 2,
**caractérisé en ce que**
la longueur axiale (1) l'étage (39) est plus petite que le diamètre (d₄) de la bague de brasage (4) pour créer la fente (238) entre la face frontale (21) d'une conduite de fluide (2) introduite dans le connecteur de raccordement (3) et la surface de limitation axiale (38).

4. Connecteur de raccordement (3) selon l'une quelconque des revendications précédentes,
**caractérisé en ce que**
le connecteur de raccordement (3) est un connecteur hydraulique et comprend au moins un écrou-raccord (30) et la conduite de fluide (2) en forme de tube et/ou de tuyau est un tube hydraulique.

5. Connecteur de raccordement (3) selon l'une quelconque des revendications précédentes,
**caractérisé en ce que**
l'au moins une deuxième section de raccordement (32) est conique, en particulier une section de cône d'étanchéité.

6. Connecteur de raccordement (3) selon l'une quelconque des revendications précédentes,
**caractérisé en ce que**
la transition des surfaces disposées perpendiculairement l'une par rapport à l'autre de l'au moins un étage (39), de la surface (139) de celui-ci s'étendant axialement, prévue pour la mise en place d'une bague de soudage (4), et de la surface de limitation axiale (38) est réalisée en tant qu'arête, arrondi et/ou chanfrein.

7. Conduite de fluide assemblée (1) avec au moins une conduite de fluide (2) en forme de tube et/ou de tuyau et au moins un connecteur de raccordement (3) selon l'une quelconque des revendications précédentes, dans laquelle la conduite de fluide (2) en forme de tube et/ou de tuyau est partiellement introduite dans le connecteur de raccordement (3) et y est reliée par brasage.

8. Procédé de fabrication d'une conduite de fluide assemblée (1) selon la revendication 7, comprenant au moins une conduite de fluide (2) en forme de tube et/ou de tuyau et au moins un connecteur de raccordement (3) selon l'une quelconque des revendications 1 à 6, **caractérisé en ce que**
au moins une bague de brasage (4) est mise en place sur au moins un étage (39) d'une section étagée à l'intérieur du connecteur de raccordement (3) et la conduite de fluide (2) en forme de tube et/ou de tuyau est insérée côté extrémité dans une première section de raccordement (31) du connecteur de raccordement (3), dans lequel une fente (238) est laissée entre une surface de limitation axiale (38) réalisée dans celle-ci et la face frontale (21) de la conduite de fluide (2),
dans lequel l'espace (238) est formé par le fait que la bague de brasage (4) dans la direction axiale du connecteur de raccordement (3) dépasse de l'étage (39) dans la direction de la conduite de fluide (2), de sorte que lors de l'introduction de la conduite de fluide (2) dans le connecteur de raccordement (3) ou la première section de raccordement (31) de celui-ci la face frontale (21) de la conduite de fluide (2) se place contre la bague de brasage (4), le métal d'apport de la bague de brasage (4) est fondu et la conduite de fluide (2) est brasée au moins frontalement avec la surface de limitation axiale (38) par le métal d'apport (40) de la bague de brasage (4) fondant et parvient dans la fente (238).

9. Procédé selon la revendication 8,
**caractérisé en ce que**
le métal d'apport (40) de la bague de brasage (4) lors de la fusion parvient entre la face extérieure (23) de la conduite de fluide (2) et la face intérieure (137) de la première section de raccordement (31) du connecteur de raccordement (3) et le métal d'apport (40) après refroidissement relie la conduite de fluide (2) au connecteur de raccordement (3) par liaison de matière frontalement et circonférentiellement le long de la section de la conduite de fluide (2) reçue dans la première section de raccordement (31) du connecteur de raccordement (3).
